# EUROPÄISCHE PATENTSCHRIFT

(11) **EP 0 840 701 B1**
(45) Veröffentlichungstag und Bekanntmachung des Hinweises auf die Patenterteilung: **10.02.1999**
(21) Anmeldenummer: 96927557.7
(22) Anmeldetag: 19.07.1996
(51) Int. Cl.: B65F 1/00, B65F 3/00, B65B 31/00

(54) **VERFAHREN ZUM SAMMELN UND ENTSORGEN VON ABFÄLLEN**
WASTE COLLECTION AND DISPOSAL PROCESS
PROCEDE DE COLLECTE ET D'ELIMINATION DE DECHETS

(30) Priorität: 21.07.1995 DE 19530598; 08.01.1996 DE 19600370; 15.03.1996 DE 19610229; 19.03.1996 DE 19610859
(43) Veröffentlichungstag der Anmeldung: 13.05.1998
(73) Patentinhaber: Tils, Peter, 52355 Düren (DE)
(72) Erfinder: ESSER, Hans-Peter, D-50226 Frechen (DE); HEIN, Joachim, D., D-50226 Frechen (DE)
(74) Vertreter: Paul, Dieter-Alfred, Dipl.-Ing.
(86) Internationale Anmeldenummer: EP9603197
(87) Internationale Veröffentlichungsnummer: WO9703899

(56) Entgegenhaltungen:
- EP-A- 0 537 771
- GB-A- 2 241 937
- US-A- 4 044 524
- US-A- 5 018 876
- US-A- 5 027 578
- US-A- 5 072 833
- US-A- 5 100 005
- US-A- 5 263 520
- US-A- 5 425 456
- PATENT ABSTRACTS OF JAPAN vol. 18, no. 483 (M-1670), 8.September 1994 & JP 06 156606 A (HARMAN CO LTD), 3.Juni 1994,

## Beschreibung

Die Erfindung betrifft ein Verfahren zum Sammeln und Entsorgen von Abfällen, insbesondere Haushaltsabfällen, bei dem der Abfall nach Wertstoffrückführungskriterien in Folienbehältnissen, die durch entsprechende Kennzeichnungen voneinander unterscheidbar sind, getrennt gesammelt wird und die Folienbehältnisse für die Endlagerung und/oder weitere Verwendung zu einer zentralen Sammelstelle verfahren und dort entsprechend ihrer Kennzeichnung sortiert werden.

Neue Gesetze und Verordnungen betreffend die Vermeidung, Verringerung, Wiederaufbereitung und Weiterverwendung von Müll setzen eine sparsame Verwendung von Verpackungsmaterial, eine Verwendung von mehrfach verwendbaren Verpackungen und insbesondere eine adäquate Sortierung der entstehenden Abfälle zum Recyclen voraus. Aus diesem Grund gibt es schon seit längerer Zeit spezielle, zentral von den Gemeinden aufgestellte Container, in die die Endverbraucher ihr Altpapier und Altglas einwerfen können.

Desweiteren erfolgt in den Haushalten eine Müllsortierung, wobei im allgemeinen eine Dreifachtrennung nach Bioabfällen, Kunststoffen und sonstigen Abfällen vorgenommen wird. Diese Mülltrennung trägt zwar zur Einsparung von Wertstoffe bei, bringt jedoch Probleme hinsichtlich der sogenannten Müllhygiene mit sich. Durch die Verteilung des Mülls auf verschiedene Tonnen wird nämlich die Verweildauer des Mülls im Haushalt deutlich erhöht, da die einzelnen, verschiedenartige Abfälle enthaltenden Tonnen nur in relativ großen Zeitabständen entleert werden. Insbesondere beim Biomüll hat sich gezeigt, daß eine Aufbewahrung von Lebensmittelresten in den Biotonnen schon nach wenigen Tagen zur Verunreinigung durch Sporen, Bakterien, Maden etc. führen kann. Außerdem kann es relativ schnell zu unangenehmen Geruchsbildungen kommen.

Desweiteren erfordert die Mülltrennung, wie sie heute üblicherweise erfolgt, auch spezielle Mülltransportfahrzeuge mit voneinander getrennten Kammern für die verschiedenen Abfälle, die jeweils mit Müll beladbar und einzeln entleerbar sein müssen. Entsprechend sind die Mülltransportfahrzeuge relativ kompliziert im Aufbau und damit teuer. Alternativ können die unterschiedlichen Müll enthaltenden Tonnen auch jeweils separat abgeholt werden. Dies ist jedoch ebenfalls aufwendig und damit teuer.

Zur Behebung dieser Problematik wird in der EP-A-0 537 771 vorgeschlagen, die unterschiedlichen Müllfraktionen in entsprechend gekennzeichneten Müllsäcken zu sammeln und die Müllsäcke zusammen mit dem Müll zu entsorgen. Durch diese Maßnahme wird erreicht, daß die unterschiedlichen Müllfraktionen in einem Müllfahrzeug abtransportiert werden können, ohne daß dieses mit voneinander getrennten Kammern versehen ist, da sich die Müllfraktionen anhand der Kennzeichnungen der Müllsäcke beim Entladen des Müllfahrzeugs leicht wieder trennen lassen. Es treten jedoch nach wie vor Probleme hinsichtlich der Müllhygiene auf, da die einzelnen, verschiedenartige Abfälle enthaltenen Müllsäcke nur in relativ großen Zeitabständen entleert werden.

Aufgabe der Erfindung ist es daher, ein Verfahren zum Sammeln und Entsorgen von Haushaltsabfällen der eingangs genannten Art so auszugestalten, daß unter Beibehaltung der geforderten Mülltrennung ein hygienisches und wenig aufwendiges Sammeln und Entsorgen von Haushaltsabfällen möglich ist.

Diese Aufgabe ist erfindungsgemäß im wesentlichen dadurch gelöst, daß
a) der Abfall am Ort der Entstehung portionsweise verpackt wird, indem ein Folienbehältnis für den Abfall aus einer Schlauchfolie in der jeweils gewünschten Größe hergestellt und die Folienbehältnisse nach dem Befüllen verschweißt und vakuumiert werden, und
b) die unterschiedlichen Abfall enthaltenden verschweißten und vakuumierten Folienbehältnisse in wenigstens einem gemeinsamen Sammelgefäß ungeordnet zwischengelagert werden, bevor sie ebenfalls ungeordnet zur zentralen Sammelstelle verfahren werden.

Während bei dem bekannten Verfahren der Müll in relativ großen Müllsäcken, die bei Einfamilienhäusern in der Regel in der Garage stehen bzw. bei Mehrfamilienhäusern in einer zentralen Müllsammelstelle vorgesehen sind, gesammelt und erst zum Abtransport zur Mülldeponie verschlossen werden, ist erfindungsgemäß vorgesehen, daß der Abfall am Ort der Entstehung , d. h. direkt in Haushalten, durch Verschweißen und Vakuumieren der Folienbehältnisse verpackt wird. Hierbei ist wesentlich, daß der Abfall portionsweise verpackt wird, d. h. in kleinen Mengen, so daß die Folienbehältnisse nur eine minimale Zeit lang offenstehen und damit sichergestellt ist, daß es nicht zu Verunreinigungen durch Sporen, Bakterien, Maden etc. und auch nicht zu unangenehmen Geruchsbildungen kommen kann. Außerdem wird auch das Volumen der zu sammelnden Abfälle reduziert, so daß die zur Verfügung stehenden Mülltonnen vergleichsweise klein ausgebildet sein können.

Durch das Verschweißen und Vakuumieren wird eine hermetische Abdichtung der Folienbehältnisse erreicht, wie es an sich aus den Druckschriften US-PS 5,027,578, US-PS 5,425,456, US-PS 4,044,524 und Patent Abstracts of Japan, Vo. 18, No. 483 (M-1670), 08. September 1994, bekannt ist, allerdings nur zum Verschließen von Folienbehältnissen in Standardgrößen. Im Gegensatz dazu werden gemäß der Erfindung die Folienbehältnisse aus der Schlauchfolie in der jeweils gewünschten bzw. erforderlichen Größe hergestellt, so daß praktisch kein Verschnitt entsteht.

Schließlich hat das portionsweise Verpacken des Abfalls direkt in den Haushalten den Vorteil, daß die unterschiedlichen Abfall enthaltenden verschweißten und vakuumierten Folienbehältnisse in einem gemeinsamen Sammelgefäß, beispielsweise einer Mülltonne, in einfacher Weise ungeordnet zwischengelagert werden können, bevor sie ebenfalls ungeordnet zur zentralen Sammelstelle verfahren werden.

Eine besonders hohe Müllhygiene wird erreicht, wenn in den Folienbehältnissen jeweils mehrere Portionen Abfall gesammelt werden und jede Portion einzeln durch Verschweißung und Vakuumieren verpackt wird. Damit ist es möglich, den Müll unmittelbar nach seinem Anfall unter Vakuum zu verpacken, ohne dabei Verpackungsmaterial zu verschwenden.

Das Verpacken des in die Schlauchfolie eingefüllten Abfalls erfolgt gemäß einer weiteren Ausgestaltung der Erfindung, indem der gefüllte Teil der Schlauchfolie durch einen ersten Schweißvorgang unter Bildung einer ersten Schweißnaht verschlossen wird, dem gefüllten Teil der Schlauchfolie durch insbesondere eine Vakuumpumpe oder ein Sauggebläse die Luft entzogen und das Vakuum durch einen zweiten Schweißvorgang unter Bildung einer zweiten Schweißnaht, die zwischen der ersten Schweißnaht und dem Abfall liegt, abgeschlossen wird und schließlich das abgeschlossene Folienbehältnis abgetrennt wird. Das Verpacken des in die Schlauchfolie eingefüllten Abfalls unter Bildung von zwei parallelen Schweißnähten hat den Vorteil, daß die erste Schweißnaht, welche vor der Evakuierung des Folienbehältnisses hergestellt wird, gleichzeitig den Boden für das nächste Folienbehältnis bilden kann, wenn das Folienbehältnis an entsprechender Stelle von der Schlauchfolie getrennt wird, so daß die Handhabung einfach ist. Die zweite Schweißnaht, durch welche das evakuierte Folienbehältnis verschlossen wird, kann beispielsweise als Sollbruchstelle ausgebildet und dazu in ihrer Längsrichtung unterschiedlich stark ausgebildet sein.

Hinsichtlich weiterer vorteilhafter Ausgestaltungen des erfindungsgemäßen Verfahrens wird auf die Unteransprüche sowie die nachfolgende Beschreibung eines Ausführungsbeispiels unter Bezugnahme auf die Zeichnung verwiesen. In der Zeichnung zeigt:

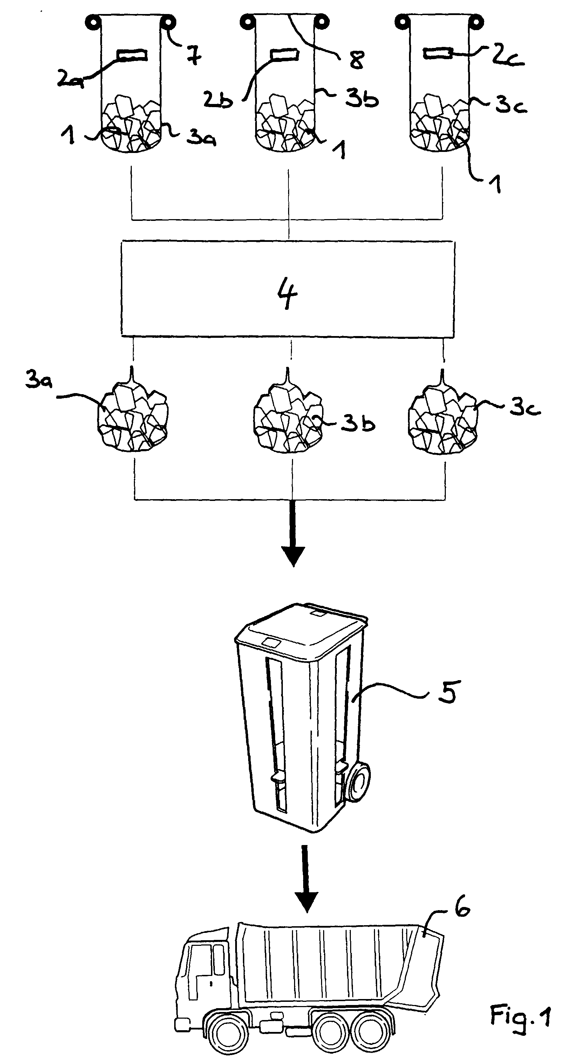

- Figur 1: in schematischer Ansicht die einzelnen Schritte, die bei dem Verfahren gemäß der vorliegenden Erfindung durchlaufen werden, und
- Figur 2: in Schnittansicht eine Schweiß- und Vakuumierein-Richtung, die zur Verwendung des in Figur 1 dargestellten Verfahrens verwendet wird.

Bei dem erfindungsgemäßen Verfahren zum Sammeln und Entsorgen von Haushaltsabfällen wird der Abfall 1 nach Wertstoffrückführungskriterien getrennt, und die einzelnen Müllarten wie Biomüll, Kunststoffe und sonstiger Müll werden in Folienbehältnissen 3a, 3b, 3c, die durch entsprechende Kennzeichnungen 2a, 2b, 2c voneinander unterscheidbar sind, getrennt voneinander gesammelt. Die Kennzeichnungen 2a, 2b, 2c können unterschiedlicher Art sein. Beispielsweise können als Kennzeichnungen 2a, 2b, 2c Symbole für die Stoffe, für die sie bestimmt sind, vorgesehen sein. Alternativ ist es auch möglich, in bekannter Weise unterschiedliche Farben für die Folienbehältnisse 3a, 3b, 3c zu wählen.

Als Folienbehältnisse 3a, 3b, 3c werden vorliegend Schlauchfolien aus biologisch abbaubarem Material verwendet, die jeweils unter Bildung eines die Oberseite bildenden Ringswulstes 7 kondomartig aufgewickelt und von dem Ringwulst 7 nach unten weg abziehbar sind, wobei die offene Unterseite des vom Ringwulst 7 herabhängenden Teils der Schlauchfolie durch einen Schweißvorgang verschlossen ist, um beutelartige Folienbehältnisse 3a, 3b, 3c zu bilden. Der Ringwulst 7 definiert eine Öffnung 8, durch welche die Folienbehältnisse 3a, 3b, 3c mit dem Abfall 1 befüllbar sind.

Wenn die Folienbehältnisse 3a, 3b, 3c mit ausreichend Abfall 1 gefüllt sind - die jeweilige Menge bestimmt der Verbraucher nach Belieben -, wird der Abfall 1 durch eine Schweiß- und Vakuumiereinrichtung 4 unter Vakuum verschweißt. Dabei ist es möglich, in jedem Folienbehältnis jeweils mehrere kleine Portionen Abfall zu sammeln und jede Portion einzeln durch Verschweißen und Vakuumieren zu verpacken.

Die auf diese Weise luftdicht verschlossenen und unterschiedliche Abfälle enthaltenden Folienbehältnisse 3a, 3b, 3c werden dann gemeinsam in einem Sammelgefäß 5, beispielsweise eine Mülltonne, in ungeordneter Weise zwischengelagert und durch herkömmliche Mülltransportfahrzeuge 6 zu einer Mülldeponie verfahren. Dort werden die Folienbehältnisse 3a, 3b, 3c wieder nach ihren Inhalten von Hand oder automatisch sortiert und ihrer weiteren Verwertung zugeführt.

Bei diesem Verfahren werden die unterschiedlichen Haushaltsabfälle somit getrennt voneinander gesammelt, jedoch zusammen zwischengelagert und zu einer Mülldeponie transportiert und erst dort wieder zur Endverwertung voneinander getrennt. Somit braucht in jedem Haushalt jeweils nur eine Mülltonne vorhanden sein, und auch die Mülltransportfahrzeuge 6 brauchen nicht speziell ausgestaltet zu sein, um die unterschiedlichen Arten von Abfall abtransportieren zu können.

Zusätzlich ist es möglich, die Folienbehältnisse mit einer Codierung zur Identifizierung des Verbrauchers und / oder der Inhalte der Folienbehältnisse zu versehen, so daß es möglich ist, die Kosten für die Müllentsorgung entsprechend des tatsächlichen Verbrauchs zu bestimmen.

In bevorzugter Weise erfolgt die Codierung durch eine entsprechende Ausbildung der Schweißnähte an den Folienbehältnissen. Beispielsweise kann zur Herstellung der Schweißnähte ein elektrischer Lichtstrahler verwendet werden, mit dem es möglich ist, Schweißnähte über ihre Länge in Art eines Bar- oder Strichcodes unterschiedlich stark auszubilden.

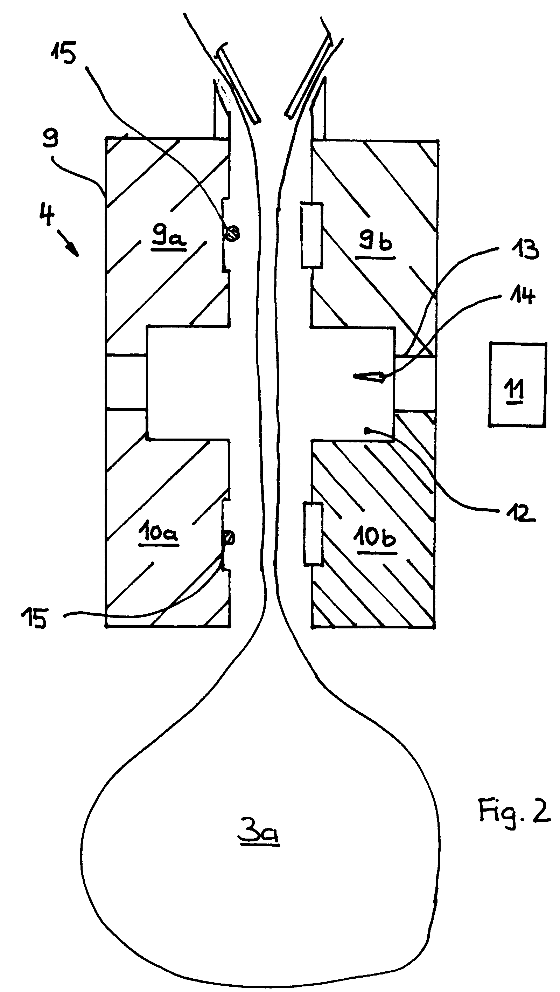

In Figur 2 ist eine Ausführungsform einer Schweiß- und Vakuumiereinrichtung 4 vorgesehen, wie sie zum Verschließen der Folienbehältnisse 3a, 3b, 3c bei dem zuvor erläuterten Verfahren verwendet wird. Zu der Einrichtung 4 gehören zwei übereinanderliegend angeordnete Schweißeinheiten 9, 10 und eine zwischen den Schweißeinheiten 9, 10 vorgesehene Vakuumiervorrichtung 11. Die Schweißeinheiten 9, 10 umfassen jeweils eine feststehende Schweißbacke 9a, 10a, an der ein Heizdraht 15 vorgesehen ist, und eine im wesentlichen horizontal gegen die feststehende Schweißbacke 9a, 10a preßbare bewegliche Schweißbacke 9b, 10b, wobei die Schlauchfolie zwischen den Schweißbacken 9a, 9b; 10a, 10b der Schweißeinheiten 9, 10 jeweils hindurchgeführt ist.

Die Vakuumiervorrichtung 11 besteht aus einem sich über die gesamte Breite der Schlauchfolie erstreckenden geschlossenen Kanal 12, über dessen Länge eine Mehrzahl von Absaugöffnungen 13 vorgesehen sind. Die Absaugöffnungen 13 haben jeweils einen spitzen Kragen 14, der es ermöglicht, in die Schlauchfolie einzudringen, um in dieser Vakuum zu ziehen. Die Kragen 14 können beheizbar sein, um Löcher in die Folie zu brennen und auf diese Weise das Einbringen der Kragen 14 in das Folienbehältnis 3a zu erleichtern.

Zum Verschließen und Vakuumieren eines Folienbehältnisses 3a wird zunächst die obere Schweißeinheit 9 betätigt, wodurch das Folienbehältnis 3a unter Bildung einer ersten Schweißnaht verschlossen wird. Anschließend wird die Vakuumiervorrichtung 11 betätigt und über die Absaugöffnungen 13 aus dem abgeschlossenen Kanal 12 Luft abgesaugt, wodurch die Schlauchfolie an die spitzen Kragen 14 angezogen wird, so daß diese in die Schlauchfolie eindringen und im Innern des Folienbehältnisses 3a ein Vakuum erzeugen.

Anschließend wird die untere Schweißeinheit 10 betätigt, um das evakuierte Folienbehältnis unterhalb der durch die spitzen Kragen 14 erzeugten Löcher zu verschließen und gleichzeitig von der Schlauchfolie abzutrennen.

Schließlich werden die Schweißbacken 9a, 9b, 10a, 10b der Schweißeinheiten 9, 10 wieder auseinandergefahren, so daß weitere Schlauchfolie für ein neues Folienbehältnis nach unten von dem Ringwulst 7 abgezogen werden kann. Dabei bildet die erste Schweißnaht, die im vorangegangenen Verschließ- und Evakuierungsvorgang zum Verschließen des Folienbehältnisses hergestellt worden ist, den Boden für das nächste Folienbehältnis.

## Patentansprüche

1. Verfahren zum Sammeln und Entsorgen von Abfällen, insbesondere Haushaltsabfällen, bei dem der Abfall (1) nach Wertstoffrückführungskriterien in Folienbehältnissen (3a, 3b, 3c), die durch entsprechende Kennzeichnungen (2a, 2b, 2c) voneinander unterscheidbar sind, getrennt gesammelt wird und die Folienbehältnisse (3a, 3b, 3c) für die Endlagerung und/oder weitere Verwendung zu einer zentralen Sammelstelle verfahren und dort entsprechend ihrer Kennzeichnung (2a, 2b, 2c) sortiert werden,
dadurch gekennzeichnet, daß
a) der Abfall am Ort der Entstehung portionsweise verpackt wird, indem ein Folienbehältnis (3a, 3b, 3c) für den Abfall aus einer Schlauchfolie in der jeweils gewünschten Größe hergestellt und die Folienbehältnisse (3a, 3b, 3c) nach dem Befüllen verschweißt und vakuumiert werden, und
b) die unterschiedlichen Abfall enthaltenden verschweißten und vakuumierten Folienbehältnisse (3a, 3b, 3c) in wenigstens einem gemeinsamen Sammelgefäß (5) ungeordnet zwischengelagert werden, bevor sie ebenfalls ungeordnet zur zentralen Sammelstelle verfahren werden.

2. Verfahren nach Anspruch 1,
dadurch gekennzeichnet, daß in den Folienbehältnissen (3a, 3b, 3c) jeweils mehrere Portionen Abfall (1) gesammelt werden und jede Portion einzeln durch Verschweißen und Vakuumieren verpackt wird.

3. Verfahren nach Anspruch 1 oder 2,
dadurch gekennzeichnet, daß die Folienbehältnisse (3a, 3b, 3c) aus einer Schlauchfolie aus biologisch abbaubarem Kunststoff hergestellt werden.

4. Verfahren nach einem der vorstehenden Ansprüche,
dadurch gekennzeichnet, daß zum Verpacken des in die Schlauchfolie eingefüllten Abfalls (1) der gefüllte Teil der Schlauchfolie durch einen ersten Schweißvorgang unter Bildung einer ersten Schweißnaht verschlossen wird, dem gefüllten Teil der Schlauchfolie durch insbesondere eine Vakuumpumpe (11) oder ein Sauggebläse die Luft entzogen wird und das Vakuum durch einen zweiten Schweißvorgang unter Bildung einer zweiten Schweißnaht, die zwischen der ersten Schweißnaht und dem Abfall (1) liegt, abgeschlossen und das abgeschlossene Folienbhältnis (3a, 3b, 3c) von der Schlauchfolie abgetrennt wird.

5. Verfahren nach Anspruch 4,
dadurch gekennzeichnet, daß zur Vakuumierung Löcher in das abgeschlossene Folienbehältnis (3a, 3b, 3c) gestoßen oder gebrannt werden und durch diese Löcher dem Folienbehältnis (3a, 3b, 3c) die Luft entzogen wird, und daß die zweite Schweißnaht zwischen den Löchern und dem Abfall (1) an dem Folienbehältnis (3a, 3b, 3c) am Folienbehältnis (3a, 3b, 3c) angebracht wird.

6. Verfahren nach Anspruch 5,
dadurch gekennzeichnet, daß die Abtrennung an der zweiten Schweißnaht erfolgt und dazu insbesondere die zweite Schweißnaht unter Bildung einer Sollbruchstelle in ihrer Längsrichtung unterschiedlich stark ausgebildet ist.

7. Verfahren nach einem der Ansprüche 4 bis 6,
dadurch gekennzeichnet, daß zumindest für die Herstellung der zweiten Schweißnaht ein elektrischer Lichtstrahler als Schweißeinrichtung verwendet wird.

8. Verfahren nach einem der Ansprüche 1 bis 7,
dadurch gekennzeichnet, daß die Folienbehältnisse (3a, 3b, 3c) insbesondere während des Schweiß- und Vakuumierungsvorgangs mit einer Codierung zur Identifizierung des Verbrauchers versehen werden.

9. Verfahren nach Anspruch 8,
dadurch gekennzeichnet, daß die Codierung durch eine entsprechende Ausbildung der Schweißnaht an der Oberseite und/oder der Unterseite der Folienbehältnisse (3a, 3b, 3c) erfolgt.

10. Verfahren nach einem der Ansprüche 1 bis 9,
dadurch gekennzeichnet, daß Folienbehältnisse (3a, 3b, 3c) verwendet werden, die zur Kennzeichnung ihrer Inhalte unterschiedliche Farben haben.

11. Verfahren nach einem der Ansprüche 1 bis 10,
dadurch gekennzeichnet, daß die Folienbehältnisse zur Kennzeichnung ihrer Inhalte jeweils mit Symbolen für die Stoffe, für die sie bestimmt sind, versehen werden.

12. Verfahren nach einem der Ansprüche 1 bis 11,
dadurch gekennzeichnet, daß die verschweißten und vakuumierten Folienbehältnisse (3a, 3b, 3c) vor dem Verfahren zur zentralen Sammelstelle gewogen werden und aufgrund des erfaßten Gewichts eine Kostenberechnung erfolgt.

13. Verfahren nach einem der Ansprüche 1 bis 12,
dadurch gekennzeichnet, daß die Folienbehältnisse (3a, 3b, 3c) an der zentralen Sammelstelle vollautomatisch durch Erkennung ihrer Kennzeichnungen bzw. der vorgesehenen Codierung sortiert werden.

## Claims

1. Process for collection and disposal of waste, in particular domestic waste, in which the waste (1) is separately collected with regard to recycling criteria in foil containers (3a, 3b, 3c) which are distinguishable from each other by respective identification marks (2a, 2b, 2c), and the foil containers (3a, 3b, 3c) are transported for final disposal and/or further use to a central collection point where they are sorted according to their identification marks (2a, 2b, 2c), **characterised in that**
a: the waste is at its place of origin packed in portions in that a foil container (3a, 3b, 3c) for the waste is produced at the desired size from a foil tube, and after having been filled the foil containers (3a, 3b, 3c) are sealed and vacuum-packed, and
b: the sealed and vacuum-packed foil containers (3a, 3b, 3c) which contain different types of waste are intermediately stored unsorted in at least one common collecting vessel (5) prior to being transported, still unsorted, to a central collection point.

2. Process according to Claim 1, **characterised in that** a respective number of portions of waste (1) is collected in the foil containers, and each portion is individually packaged by sealing and vacuum-packing.

3. Process according to Claim 1 or 2, **characterised in that** the foil containers (3a, 3b, 3c) are produced from a foil hose of biologically degradable plastic.

4. Process according to one of the above claims, **characterised in that**, for the purpose of packaging waste (1) which has been filled into the foil hose, the filled portion of the foil hose is sealed by a first welding process whilst establishing a first welding seam, air is extracted from the filled portion of the foil hose, in particular by a vacuum pump (11) or a suction blower, and the vacuum is sealed by a second welding process whilst establishing a second welding seam located between the first welding seam and the waste (1), and the sealed foil container (3a, 3b, 3c) is separated from the foil hose.

5. Process according to Claim 4, **characterised in that**, for the purpose of vacuum-packaging, holes are punched or burned into the sealed foil container (3a, 3b, 3c) and air is extracted from the foil container (3a, 3b, 3c) through these holes, and the second welding seam is applied on the foil container (3a, 3b, 3c) between the holes and the waste (1).

6. Process according to Claim 5, **characterised in that** separation is carried out at the second welding seam, and in particular the second welding seam is then of different strength whilst establishing a nominal breaking point in its longitudinal direction.

7. Process according to one of Claims 4 to 6, **characterised in that** an electric lightbeam is used as welding device at least for producing the second welding seam.

8. Process according to one of Claims 1 to 7, **characterised in that** the foil containers (3a, 3b, 3c) are, in particular during the welding and vacuum-packaging process, provided with a code for identification of the consumer.

9. Process according to Claim 8, **characterised in that** encoding is performed by a respective design of the welding seam at the top and/or bottom of the foil containers (3a, 3b, 3c).

10. Process according to one of Claims 1 to 9, **characterised in that** foil containers (3a, 3b, 3c) are used which are of different colour so as to allow identification of their contents.

11. Process according to one of Claims 1 to 10, **characterised in that** the foil containers are provided with symbols of the materials they are intended for so as to mark their contents.

12. Process according to one of Claims 1 to 11, **characterised in that** the welded and vacuum-packaged foil containers (3a, 3b, 3c) are prior to being transported to the central collection point weighed, and charges are made based on the determined weight.

13. Process according to one of Claims 1 to 12, **characterised in that** the foil containers (3a, 3b, 3c) are fully automatically sorted at the central collecting point by recognition of their identification marks or provided encoding.

## Revendications

1. Procédé de collecte et d'élimination de déchets, notamment de déchets ménagers, suivant lequel les déchets (1) sont collectés séparément, selon des critères de recyclage des matières valables, dans des contenants (3a, 3b, 3c) en film plastique qui peuvent être différenciés les uns des autres par des marquages correspondants (2a, 2b, 2c), les contenants en film (3a, 3b, 3c) étant transportés, en vue de leur stockage définitif et/ou de leur traitement, jusqu'à un centre de collecte où ils sont triés d'après leur marquage (2a, 2b, 2c),
**caractérisé** en ce que
a) les déchets sont emballés par portions à leur lieu de production, par le fait qu'on fabrique pour les déchets, à partir d'un film plastique en gaine, un contenant en film (3a, 3b, 3c) de la taille respectivement souhaitée, et les contenants en film (3a, 3b, 3c) sont, une fois remplis, scellés et mis au vide, et
b) les contenants en film (3a, 3b, 3c) scellés et mis au vide, qui contiennent des déchets différents, sont entreposés sans ordre dans au moins un récipient collecteur (5) commun, avant d'être transportés également sans ordre jusqu'au centre de collecte.

2. Procédé selon la revendication 1, **caractérisé** en ce que plusieurs portions de déchets (1) sont collectées dans chaque contenant en film (3a, 3b, 3c), et chaque portion est individuellement emballée par scellement et mise au vide.

3. Procédé selon la revendication 1 ou 2, **caractérisé** en ce que les contenants en film (3a, 3b, 3c) sont fabriqués à partir d'un film en gaine en matière plastique biodégradable.

4. Procédé selon une des revendications précédentes, **caractérisé** en ce que, pour emballer les déchets (1) remplis dans le film en gaine, la partie remplie du film en gaine est scellée par une première opération de soudage en formant un premier joint soudé, l'air est évacué de la partie remplie du film en gaine, notamment par une pompe à vide (11), ou par un ventilateur aspirant, et la partie sous vide est fermée par une deuxième opération de soudage en formant un second joint soudé, qui se trouve entre le premier joint soudé et les déchets (1), et le contenant en film (3a, 3b, 3c) fermé est détaché du film en gaine.

5. Procédé selon la revendication 4, **caractérisé** en ce que, pour la mise au vide, des trous sont percés ou brûlés dans le contenant en film fermé (3a, 3b, 3c), et l'air est évacué du contenant en film (3a, 3b, 3c) par ces trous, et en ce que le second joint soudé est pratiqué entre les trous et les déchets (1) sur le contenant en film (3a, 3b, 3c).

6. Procédé selon la revendication 5, **caractérisé** en ce que le détachement s'effectue au niveau du second joint soudé et, à cet effet, le second joint soudé est notamment réalisé d'épaisseur variable dans sa direction longitudinale, en formant un point de rupture privilégiée.

7. Procédé selon une des revendications 4 à 6, **caractérisé** en ce qu'on utilise un appareil électrique à rayon lumineux comme dispositif de soudage au moins pour la réalisation du second joint soudé.

8. Procédé selon une des revendications 1 à 7, **caractérisé** en ce que les contenants en film (3a, 3b, 3c) sont pourvus, notamment pendant l'opération de soudage et de mise au vide, d'une codification pour l'identification de l'utilisateur.

9. Procédé selon la revendication 8, **caractérisé** en ce que la codification s'effectue par une configuration correspondante du joint soudé sur le dessus et/ou le dessous des contenants en film (3a, 3b, 3c).

10. Procédé selon une des revendications 1 à 9, **caractérisé** en ce qu'on utilise des contenants en film (3a, 3b, 3c) qui possèdent des couleurs différentes pour le marquage de leurs contenus.

11. Procédé selon une des revendications 1 à 10, **caractérisé** en ce que les contenants en film sont pourvus, pour le marquage de leurs contenus, de symboles respectifs des matières auxquelles ils sont destinés.

12. Procédé selon une des revendications 1 à 11, **caractérisé** en ce que les contenants en film (3a, 3b, 3c) scellés et mis au vide sont pesés avant d'être transportés au centre de collecte, et la facturation s'effectue sur la base du poids enregistré.

13. Procédé selon une des revendications 1 à 12, **caractérisé** en ce que les contenants en film (3a, 3b, 3c) sont, au centre de collecte, triés de façon entièrement automatisée par reconnaissance de leurs marquages ou encore de l'identification prévue.
